# EUROPÄISCHE PATENTANMELDUNG

(11) **EP 4 814 765 A1**
(43) Veröffentlichungstag der Anmeldung: **30.09.2026**
(21) Anmeldenummer: 25166573.3
(22) Anmeldetag: 27.03.2025
(51) Int. Cl.: G06F 21/57, H04L 9/40

(54) **VERFAHREN UND COMPUTERPROGRAMM ZUR BEHANDLUNG VON INFORMATIONSSICHERHEITS-SCHWACHSTELLEN INNERHALB EINES INDUSTRIELLEN AUTOMATISIERUNGSSYSTEMS**

(71) Anmelder: Siemens Aktiengesellschaft, 80333 München (DE)
(72) Erfinder: Schmidbauer, Martin, 85221 Dachau (DE); Pryakhina, Natalia, 91058 Erlangen (DE); Scheiner, Thomas, 81543 München (DE)
(74) Vertreter: Siemens Patent Attorneys

(57) **Zusammenfassung**

Die Erfindung betrifft ein Verfahren zur Behandlung von Informationssicherheits-Schwachstellen innerhalb eines industriellen Automatisierungssystems, bei dem Geräte (10) und/oder Ressourcen des Automatisierungssystems ermittelt werden, die gegenüber einem unberechtigten Zugriff zu schützen sind. Für die ermittelten Geräte (10) und/oder Ressourcen werden bekannte Informationssicherheits-Schwachstellen (11-15) erfasst. Pro Gerät (10) und/oder Ressource wird eine geräte- und/oder ressourcenindividuelle Aufgabenliste (110) mit sämtlichen für das Gerät und/oder die Ressource vorgesehenen Maßnahmen (111-114) erstellt, die zur Behandlung der erfassten Informationssicherheits-Schwachstellen (11-15) erforderlich oder geeignet sind. Anhand der jeweiligen geräte- und/oder ressourcenindividuellen Aufgabenliste (110) werden die Maßnahmen (111-114) darauf überprüft, ob sie bei mehreren Informationssicherheits-Schwachstellen (11-15) zur Behebung vorgesehen sind. Maßnahmen (111-113), die bei mehreren Informationssicherheits-Schwachstellen (11-14) vorgesehen sind, werden in der jeweiligen geräte- und/oder ressourcenindividuellen Aufgabenliste (110) miteinander verknüpft. Bei miteinander verknüpften Maßnahmen (111-113) erfolgt nur eine einmalige Umsetzung für sämtliche Informationssicherheits-Schwachstellen (11-14), bei denen die jeweilige Maßnahme zur Behebung vorgesehen ist.

## Beschreibung

Die vorliegende Erfindung betrifft ein Verfahren zur Behandlung von Informationssicherheits-Schwachstellen innerhalb eines industriellen Automatisierungssystems und ein Computerprogramm zur Durchführung des Verfahrens.

Unabhängig vom grammatikalischen Geschlecht eines bestimmten Begriffes sind Personen mit männlicher, weiblicher oder anderer Geschlechteridentität mit umfasst.

Industrielle Automatisierungssysteme umfassen üblicherweise eine Vielzahl von über ein industrielles Kommunikationsnetz miteinander vernetzten Automatisierungsgeräten und dienen im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet. Insbesondere können Steuerungsdienste bzw. -anwendungen automatisiert und auslastungsabhängig auf aktuell verfügbare Server oder virtuelle Maschinen eines industriellen Automatisierungssystems verteilt werden.

Automatisierungsgeräte bzw. Endgeräte, die zur Steuerung von Maschinen bzw. Vorrichtungen zeitkritische Daten mit Kommunikationspartnern austauschen, sind besonders gegenüber einer Manipulation und einem Mitlesen sensibler Daten zu schützen. Eine Schutzmaßnahme ist neben einer Software- bzw. Firmware-Aktualisierung insbesondere eine Verschlüsselung von Kommunikation von bzw. zu oben genannten Geräten. Hierfür werden üblicherweise Verschlüsselungsprotokolle, wie TLS (Transport Layer Security) oder SSL (Secure Socket Layer), verwendet, die für jedes Gerät eine Bereitstellung eines Schlüsselpaars und eines auf einem öffentlichen Schlüssel des Schlüsselpaars basierendes Zertifikat vorsehen. Dabei ist durch eine geeignete Konfiguration sicherzustellen, dass keine Informationssicherheits-Schwachstellen entstehen bzw. ausgenutzt werden können.

Zur Verhinderung eines Ausnutzens von bestehenden Schwachstellen in Programmcode können beispielsweise Compiler-basierte Exploit Protection Konzepte genutzt werden, die in den Programmcode während eines Kompiliervorgangs zusätzliche Schutz- bzw. Überprüfungsroutinen einfügen. Derartige Schutzkonzepte können rein Software-basiert oder mit Hardware-Unterstützung realisiert sein. Insbesondere können mit diesen Schutzkonzepten Bedrohungen wie Code Injection, Buffer Overflows, Return-oriented Programming (ROP) und Jump-oriented Programming (JOP) zur Laufzeit erkannt werden. Bei Erkennung eines potentiellen Angriffs wird beispielsweise eine Fehlermeldung in einer Kommandozeile ausgegeben oder eine Programmausführung umgehend gestoppt. Auf diese Weise wird eine Ausnutzung von bestehenden Schwachstellen erschwert.

Aus EP 3 650 968 A1 ist ein Verfahren zum Betrieb einer Produktions- oder Werkzeugmaschine bekannt, bei dem eine zumindest einen virtuellen Container umfassenden App zusammen mit einer App-Konfiguration aus einem entfernten Speicher in einen Speicher der Produktions- oder Werkzeugmaschine heruntergeladen wird. Dabei wird ein unmittelbarer Start der heruntergeladenen App auf der Produktions- oder Werkzeugmaschine verhindert. Zunächst wird die App-Konfiguration der heruntergeladenen App automatisch modifiziert. Hierzu werden von der App-Konfiguration umfasste Bezeichner ausgewertet und mit von einer Positivliste bzw. einer Negativliste umfassten Bezeichnern verglichen. Ein weder in der Positivliste noch in der Negativliste enthaltener Bezeichner wird durch einen automatisch ausgewählten oder automatisch generierten Zielausdruck ersetzt. Nach dem Modifizieren der App-Konfiguration wird die heruntergeladene App automatisch gestartet.

In WO 2020/182627 A1 ist ein Verfahren zur Überwachung der Integrität eines industriellen Cyber-physischen Systems beschrieben, bei dem Messdaten, die mit verschiedenen Sensoren des Cyber-physischen Systems erfasst wurden, bzw. Steuerdaten, die für verschiedene Aktuatoren des Cyber-physischen Systems bestimmt sind, bereitgestellt bzw. abgegriffen werden. Außerdem wird wenigstens ein Messdaten-Zusammenhangsparameter zwischen den mit den verschiedenen Sensoren erfassten Messdaten ermittelt, bzw. es wird wenigstens ein Steuerdaten-Zusammenhangsparameter zwischen den für die verschiedenen Aktuatoren bestimmten Steuerdaten ermittelt. Der wenigstens eine Messdaten-Zusammenhangsparameter wird mit einer Messdaten-Zusammenhangs-Referenz verglichen, bzw. der wenigstens eine Steuerdaten-Zusammenhangsparameter wird mit einer Steuerdaten-Zusammenhangs-Referenz verglichen. Basierend auf dem Vergleich wird die Integrität des zu überwachenden Cyber-physischen Systems beurteilt.

Insbesondere bei Automatisierungsgeräten oder Endgeräten, die in einem industriellen Automatisierungssystem verwendet werden, werden über ihren langen Lebenszyklus hinweg Informationssicherheits-Schwachstellen in ihrer Firmware gefunden. Für bekannt gewordene Schwachstellen veröffentlichen Hersteller oder auch Dritte Informationen bzw. Empfehlungen, wie mit den Schwachstellen umgegangen werden sollte. Zur Beseitigung derartiger Schwachstellen kann beispielsweise die Firmware aktualisiert werden, oder es können anderweitige Maßnahmen zur Umgehung oder Abschwächung eines mit der Schwachstelle verbundenen Problems getroffen werden.

Angesichts einer zunehmenden Vernetzung zwischen Automatisierungsgeräten bzw. Endgeräten kann ein längerfristiges Ignorieren von Schwachstellen insbesondere für Anlagenbetreiber keinen tragfähigen Ansatz darstellen. Aus diesem Grund ist es für Anlagenbetreiber essentiell, Geräte bzw. Ressourcen mit bekannten Schwachstellen zu identifizieren und Maßnahmen zu ihrer Beseitigung oder zumindest zu ihrer Abschwächung oder Umgehung einzuleiten. In industriellen Automatisierungssystemen beispielsweise können viele Maßnahmen häufig nur während eines Anlagenstillstands umgesetzt werden. Darüber hinaus ist sicherzustellen, dass eine Umsetzung der Maßnahmen nicht zulasten von Interoperabilität bzw. Kompatibilität zwischen Geräten innerhalb einer Anlage geht.

Für Anlagenbetreiber stellen sich damit besondere Herausforderungen, für eine große Menge unterschiedlicher Geräte bzw. Ressourcen innerhalb einer Anlage Maßnahmen zur Behandlung von Informationssicherheits-Schwachstellen zu planen und umzusetzen. Neben zeitlichen Rahmenbedingungen ist dabei zu berücksichtigen, eine isolierte Betrachtung von Schwachstellen zu vermeiden - insbesondere, da mit einer Maßnahme mehrere Schwachstellen gleichzeitig behoben werden können - und die Maßnahmen effizient und widerspruchsfrei umzusetzen.

Der vorliegenden Erfindung liegt daher die Aufgabe zugrunde, ein automatisiertes, benutzerfreundliches Verfahren zur effizienten und widerspruchsfreien Behandlung von Informationssicherheits-Schwachstellen innerhalb eines industriellen Automatisierungssystems anzugeben und eine geeignete technische Implementierung zu seiner Durchführung zu schaffen.

Diese Aufgabe wird erfindungsgemäß durch ein Verfahren mit den in Anspruch 1 angegebenen Merkmalen und durch ein Computerprogramm mit den in Anspruch 14 angegebenen Merkmalen gelöst. Vorteilhafte Weiterbildungen der vorliegenden Erfindung sind in den abhängigen Patentansprüchen angegeben.

Entsprechend dem erfindungsgemäßen Verfahren zur Behandlung von Informationssicherheits-Schwachstellen innerhalb eines industriellen Automatisierungssystems werden Geräte bzw. Ressourcen des Automatisierungssystems ermittelt, die gegenüber einem unberechtigten Zugriff zu schützen sind. Für die ermittelten Geräte bzw. Ressourcen werden bekannte Informationssicherheits-Schwachstellen erfasst. Informationssicherheit ist insbesondere ein Zustand von technischen oder nicht-technischen Systemen zur Informationsverarbeitung und -speicherung, der Vertraulichkeit, Verfügbarkeit und Integrität als Schutzziele sicherstellen soll. Beispielsweise dient Informationssicherheit einem Schutz vor Gefahren bzw. Bedrohungen, einer Vermeidung von Schäden und einer Minimierung von Risiken.

Die Informationssicherheits-Schwachstellen können vorteilhafterweise anhand durch von Geräteherstellern bzw. von vertrauenswürdigen Instanzen bereitgestellten Informationen erfasst werden. Dabei können die Maßnahmen zur Behandlung der Informationssicherheits-Schwachstellen anhand durch von Geräteherstellern bzw. von vertrauenswürdigen Instanzen bereitgestellten Empfehlungen ermittelt werden. Die Maßnahmen umfassen vorzugsweise Software-Aktualisierungen, insbesondere Firmware-Updates, bzw. Konfigurationsänderungen. Die durch Gerätehersteller bzw. durch vertrauenswürdige Instanzen bereitgestellten Informationen bzw. Empfehlungen können beispielsweise Angaben umfassen, durch welche Firmware-Versionen die jeweilige Informationssicherheits-Schwachstelle behoben wird.

Erfindungsgemäß wird pro Gerät bzw. Ressource eine geräte- bzw. ressourcenindividuelle Aufgabenliste mit sämtlichen für das Gerät bzw. die Ressource vorgesehenen Maßnahmen erstellt, die zur Behandlung der erfassten Informationssicherheits-Schwachstellen erforderlich oder geeignet sind. Die Maßnahmen werden anhand der jeweiligen geräte- bzw. ressourcenindividuellen Aufgabenliste darauf überprüft, ob sie bei mehreren Informationssicherheits-Schwachstellen zur Behebung vorgesehen sind. Maßnahmen, die bei mehreren Informationssicherheits-Schwachstellen vorgesehen sind, werden in der jeweiligen geräte- bzw. ressourcenindividuellen Aufgabenliste miteinander verknüpft. Bei miteinander verknüpften Maßnahmen erfolgt nur eine einmalige Umsetzung für sämtliche Informationssicherheits-Schwachstellen, bei denen die jeweilige Maßnahme zur Behebung vorgesehen ist. Die Aufgabenlisten mit den Maßnahmen können beispielsweise geräte- bzw. ressourcenweise abgearbeitet werden.

Durch die geräte- bzw. ressourcenindividuellen Aufgabenlisten mit sämtlichen für die Geräte bzw. Ressourcen vorgesehenen Maßnahmen wird ein zentraler Anknüpfungspunkt geschaffen, durch den sich eine unnötige oder gar nachteilig wiederholte Umsetzung von Maßnahmen vermeiden lässt. Auch mögliche Konflikte zwischen Maßnahmen lassen sich effizient und widerspruchsfrei auflösen. Eine Reduktion möglicher Fehlerquellen resultiert insbesondere daraus, dass Maßnahmen, die für mehrere Informationssicherheits-Schwachstellen relevant sind, automatisch und zeitsparend miteinander verknüpft werden.

Entsprechend einer besonders benutzerfreundlichen Ausgestaltung der vorliegenden Erfindung werden zur Erstellung der geräte- bzw. ressourcenindividuellen Aufgabenlisten an einer graphischen Benutzerschnittstelle eines Anlagenüberwachungssystems jeweils mögliche Maßnahmen für die jeweilige Informationssicherheits-Schwachstelle zur Benutzerauswahl angezeigt. Dabei wird eine der möglichen Maßnahmen entsprechend Benutzerauswahl in eine aktuell bearbeitete geräte- bzw. ressourcenindividuelle Aufgabenliste eingetragen. Insbesondere erfolgt eine automatische Verknüpfung mit sämtlichen übereinstimmenden Maßnahmen in der geräte- bzw. ressourcenindividuellen Aufgabenliste, die bei anderen Informationssicherheits-Schwachstellen zur Behebung vorgesehen sind. Hierdurch werden potentielle Fehlerquellen nochmals reduziert.

Darüber hinaus werden die Informationssicherheits-Schwachstellen vorzugsweise für eine Festlegung einer Benutzerpriorisierung der Maßnahmen bei Erstellung der geräte- bzw. ressourcenindividuellen Aufgabenlisten mit einer Risikobewertung, insbesondere in Form eines Risikolevels, an der graphischen Benutzerschnittstelle des Anlagenüberwachungssystems angezeigt. Die Maßnahmen werden dann entsprechend der Benutzerpriorisierung durch ein Konfigurationssystem des industriellen Automatisierungssystems abgearbeitet. Somit kann sichergestellt werden, dass Informationssicherheits-Schwachstellen, die für ein industrielles Automatisierungssystem am erheblichsten sind, schnell beseitigt bzw. minimiert werden. Vorzugsweise werden die jeweils möglichen Maßnahmen für die jeweilige Informationssicherheits-Schwachstelle zur Benutzerauswahl mit einer Bewertung einer Risikoreduktion durch die jeweilige Maßnahme an der graphischen Benutzerschnittstelle des Anlagenüberwachungssystems angezeigt werden. Auf diese Weise können effektive Maßnahmen einfach ermittelt werden

Entsprechend einer weiteren Ausgestaltung der vorliegenden Erfindung werden die Maßnahmen anhand der geräte- bzw. ressourcenindividuellen Aufgabenlisten darauf überprüft, ob sie für mehrere Geräte bzw. Ressourcen vorgesehen sind. Für mehrere Geräte bzw. Ressourcen vorgesehene Maßnahmen werden in den geräte- und/oder ressourcenindividuellen Aufgabenlisten miteinander verknüpft. Bei miteinander verknüpften Maßnahmen erfolgt nur eine einmalige Umsetzung für sämtliche Geräte und/oder Ressourcen, die von der jeweiligen Maßnahme betroffen sind. Damit können auch über Geräte- bzw. Ressourcengrenzen hinweg widerspruchsfreie Maßnahmen festgelegt werden. Insbesondere unter Interoperabilitäts- bzw. Kompatibilitätsgesichtspunkten ist dies ein großer Vorteil. Beispielsweise müssen grundsätzlich erforderliche Firmware-Updates nicht mehr aus Sorge zurückgestellt werden, dass Geräte mit aktualisierter Firmware nicht mehr im Zusammenspiel mit anderen Geräten funktionieren. Vorteilhafterweise wird eine entsprechend Benutzerauswahl in eine aktuell bearbeitete geräte- bzw. ressourcenindividuelle Aufgabenliste eingetragene Maßnahme automatisch mit sämtlichen weiteren Aufgabenlisten für Geräte bzw. Ressourcen verknüpft wird, die ebenfalls die jeweilige Maßnahme erfordern. Auf diese Weise wird ein Höchstmaß an reibungslosem Zusammenspiel zwischen unterschiedlichen Geräten bzw. Ressourcen erreicht.

Entsprechend einer bevorzugten Ausgestaltung der vorliegenden Erfindung wird an der graphischen Benutzerschnittstelle des Anlagenüberwachungssystems für ein ausgewähltes Gerät bzw. für eine ausgewählte Ressource eine Liste verfügbarer Firmware-Versionen zur Benutzerauswahl angezeigt, und zwar mit einer Angabe der Informationssicherheits-Schwachstellen des ausgewählten Geräts bzw. der ausgewählten Ressource, die durch die jeweilige Firmware-Version jeweils behoben werden. Vorteilhafterweise wird die geräte- bzw. ressourcenindividuelle Aufgabenliste automatisch an die jeweilige Firmware-Version angepasst. Darüber hinaus kann die Liste der verfügbaren Firmware-Versionen mit der Angabe der durch die jeweilige Firmware-Version jeweils behobenen Informationssicherheits-Schwachstellen nach einem Riskolevel der behobenen Informationssicherheits-Schwachstellen sortiert angezeigt werden. Insgesamt ermöglicht dies eine große Zeitersparnis und ein hohes Maß an Transparenz bei einer Auswahl zu installierender Firmware-Updates. Beispielsweise ist schnell sichtbar, welche Informationssicherheits-Schwachstellen mit welchem Schweregrad nach Firmware-Updates bestehen bleiben und durch anderweitige Maßnahmen zu adressieren sind. Auf dieser Grundlage kann ein Sicherheitslevel innerhalb eines industriellen Automatisierungssystems gezielt gesteigert werden.

Das erfindungsgemäße Computerprogramm ist zur Durchführung eines Verfahrens entsprechend vorangehenden Ausführungen geeignet und weist zumindest einen in einen Arbeitsspeicher einer Datenverarbeitungseinrichtung ladbaren und durch einen Prozessor der Datenverarbeitungseinrichtung ausführbaren Codeabschnitt auf. Bei Ausführung des Codeabschnitts werden Geräte bzw. Ressourcen des Automatisierungssystems ermittelt, die gegenüber einem unberechtigten Zugriff zu schützen sind, wenn das Computerprogramm in der Datenverarbeitungseinrichtung abläuft. Außerdem werden bei Ausführung des Codeabschnitts für die ermittelten Geräte und/oder Ressourcen bekannte Informationssicherheits-Schwachstellen erfasst. Des Weiteren wird pro Gerät bzw. Ressource eine geräte- bzw. ressourcenindividuelle Aufgabenliste mit sämtlichen für das Gerät bzw. die Ressource vorgesehenen Maßnahmen erstellt, die zur Behandlung der erfassten Informationssicherheits-Schwachstellen erforderlich oder geeignet sind.

Darüber hinaus werden die Maßnahmen bei Ausführung des Codeabschnitts des erfindungsgemäßen Computerprogramms anhand der jeweiligen geräte- bzw. ressourcenindividuellen Aufgabenliste darauf überprüft, ob sie bei mehreren Informationssicherheits-Schwachstellen zur Behebung vorgesehen sind. Maßnahmen, die bei mehreren Informationssicherheits-Schwachstellen vorgesehen sind, werden in der jeweiligen geräte- bzw. ressourcenindividuellen Aufgabenliste miteinander verknüpft. Bei miteinander verknüpften Maßnahmen erfolgt durch das erfindungsgemäße Computerprogramm nur eine einmalige Umsetzung für sämtliche Informationssicherheits-Schwachstellen, bei denen die jeweilige Maßnahme zur Behebung vorgesehen ist.

Die vorliegende Erfindung wird nachfolgend an einem Ausführungsbeispiel anhand der Zeichnung näher erläutert. Es zeigt
- Figur 1: eine schematische Darstellung einer Behandlung von Informationssicherheits-Schwachstellen eines Geräts bzw. einer Ressource innerhalb eines industriellen Automatisierungssystems,
- Figur 2: eine schematische Darstellung einer Auswahl einer Firmware-Version zur Behandlung von Informationssicherheits-Schwachstellen.

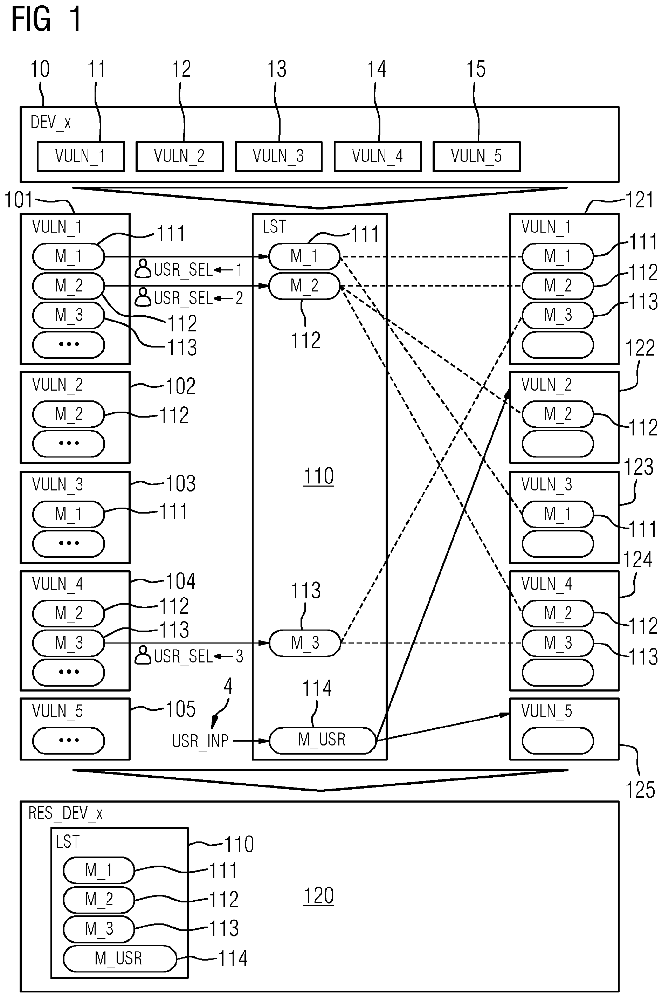

Ausgangspunkt für die in Figur 1 dargestellte Behandlung von Informationssicherheits-Schwachstellen eines Geräts bzw. einer Ressource innerhalb eines industriellen Automatisierungssystems ist zunächst eine Ermittlung von Geräten bzw. Ressourcen, die zumindest gegenüber einem unberechtigten Zugriff zu schützen sind. Für die ermittelten Geräte bzw. Ressourcen werden dann bekannte Informationssicherheits-Schwachstellen erfasst. Die Informationssicherheits-Schwachstellen können beispielsweise anhand durch von Geräteherstellern bzw. von vertrauenswürdigen Instanzen bereitgestellten Informationen erfasst werden.

Im vorliegenden Ausführungsbeispiel wird ein Gerät 10 betrachtet, für das 5 Informationssicherheits-Schwachstellen 11-15 erfasst sind. Nachfolgende Ausführungen gelten für Ressourcen mit Informationssicherheits-Schwachstellen in analoger Weise. Grundsätzlich wird pro Gerät bzw. Ressource eine geräte- bzw. ressourcenindividuelle Aufgabenliste 110 mit sämtlichen für das Gerät 10 bzw. die Ressource vorgesehenen Maßnahmen 111-114 erstellt, die zur Behandlung der erfassten Informationssicherheits-Schwachstellen 11-15 erforderlich oder geeignet sind. Diese geräte- bzw. ressourcenindividuelle Aufgabenliste 110 wird vorzugsweise zur Kontrolle bzw. Bestätigung durch Bedienpersonal an einer graphischen Benutzerschnittstelle eines Anlagenüberwachungssystems dargestellt. Allgemein werden die Maßnahmen 111-114 anhand der jeweiligen geräte- bzw. ressourcenindividuellen Aufgabenliste 110 darauf überprüft, ob sie bei mehreren Informationssicherheits-Schwachstellen 11-14 zur Behebung vorgesehen sind. Die Maßnahmen 111-114 zur Behandlung der Informationssicherheits-Schwachstellen 11-14 werden vorzugsweise anhand durch Gerätehersteller bzw. durch vertrauenswürdige Instanzen bereitgestellter Empfehlungen ermittelt. Grundsätzlich ist unabhängig von derartigen Empfehlungen auch eine benutzerindividuelle Definition von Maßnahmen möglich.

Für einen automatisierten Abgleich werden an der graphischen Benutzerschnittstelle des Anlagenüberwachungssystems jeweils in einem für jede Informationssicherheits-Schwachstelle 11-14 individuell vorgesehenen Anzeigebereich 101-105 mögliche Maßnahmen 111-113 zur Benutzerauswahl angezeigt. Wie nachfolgend im Detail erläutert wird, werden Maßnahmen 111-114, die bei mehreren Informationssicherheits-Schwachstellen 11-15 vorgesehen sind, in der geräte- bzw. ressourcenindividuellen Aufgabenliste 110 miteinander verknüpft. Bei miteinander verknüpften Maßnahmen 111-114 erfolgt nur eine einmalige Umsetzung für sämtliche Informationssicherheits-Schwachstellen 11-15, bei denen die jeweilige Maßnahme 111-114 zur Behebung vorgesehen ist.

Entsprechend Figur 1 werden für eine erste Informationssicherheits-Schwachstelle 11 insbesondere eine erste 111, zweite 112 und dritte Maßnahme 113 als Möglichkeiten im Anzeigebereich 101 vorgeschlagen, während für eine zweite Informationssicherheits-Schwachstelle 12 beispielsweise die zweite Maßnahme 112 im Anzeigebereich 102 vorgeschlagen wird. Darüber hinaus wird für eine dritte Informationssicherheits-Schwachstelle 13 im Anzeigebereich 103 insbesondere die erste Maßnahme 111 vorgeschlagen, während für eine vierte Informationssicherheits-Schwachstelle 14 im Anzeigebereich 104 beispielsweise die zweite 112 und die dritte Maßnahme 113 als Möglichkeiten zu Behebung vorgeschlagen werden. Zumindest jeweils eine der möglichen Maßnahmen 111-113 wird entsprechend Benutzerauswahl 1-3 in die geräte- bzw. ressourcenindividuelle Aufgabenliste 110 eingetragen. Bei dem in Figur 1 dargestellten Ausführungsbeispiel wird die erste Maßnahme 111 aus dem Anzeigebereich 101 für die erste Informationssicherheits-Schwachstelle 11 durch eine erste Benutzerauswahl 1 in die geräte- bzw. ressourcenindividuelle Aufgabenliste 110 eingetragen. Dabei wird die erste Maßnahme 111 für die erste Informationssicherheits-Schwachstelle 11 automatisch mit der übereinstimmenden ersten Maßnahme 111 verknüpft, die im Anzeigebereich 103 für die dritte Informationssicherheits-Schwachstelle 13 vorgeschlagen wird. Ausgewählte bzw. automatisch verknüpfte Maßnahmen 111-113 werden an der graphischen Benutzerschnittstelle des Anlagenüberwachungssystems jeweils in einem für jede Informationssicherheits-Schwachstelle 11-15 individuellen Kontrollbereich 121-125 dargestellt. Dabei werden miteinander verknüpfte Maßnahmen vorteilhafterweise durch gestrichelte Verbindungen zwischen Einträgen für Maßnahmen im jeweiligen Kontrollbereich 121-125 und Einträgen für Maßnahmen in der geräte- bzw. ressourcenindividuellen Aufgabenliste 110 hervorgehoben.

Im vorliegenden Ausführungsbeispiel wird die zweite Maßnahme 112 aus dem Anzeigebereich 101 für die erste Informationssicherheits-Schwachstelle 11 durch eine zweite Benutzerauswahl 2 in die geräte- bzw. ressourcenindividuelle Aufgabenliste 110 eingetragen. Dabei wird die zweite Maßnahme 112 für die erste Informationssicherheits-Schwachstelle 11 automatisch mit den übereinstimmenden zweiten Maßnahmen 112 verknüpft, die im Anzeigebereich 102 für die zweite Informationssicherheits-Schwachstelle 12 und im Anzeigebereich 104 für die vierte Informationssicherheits-Schwachstelle 14 vorgeschlagen werden. Dementsprechend werden die Einträge für die zweite Maßnahme 112 in den Kontrollbereichen 121, 124 einerseits und in der geräte- bzw. ressourcenindividuellen Aufgabenliste 110 andererseits mittels gestrichelter Verbindungen als miteinander verknüpft hervorgehoben.

Darüber hinaus wird im vorliegenden Ausführungsbeispiel die dritte Maßnahme 113 aus dem Anzeigebereich 104 für die vierte Informationssicherheits-Schwachstelle 14 durch eine dritte Benutzerauswahl 3 in die geräte- bzw. ressourcenindividuelle Aufgabenliste 110 eingetragen. Dabei wird die dritte Maßnahme 113 für die vierte Informationssicherheits-Schwachstelle 14 automatisch mit der übereinstimmenden dritten Maßnahme 113 verknüpft, die im Anzeigebereich 101 für die erste Informationssicherheits-Schwachstelle 11 vorgeschlagen wird. Dementsprechend werden die Einträge für die dritte Maßnahme 113 in den Kontrollbereichen 121, 124 einerseits und in der geräte- bzw. ressourcenindividuellen Aufgabenliste 110 andererseits mittels gestrichelter Verbindungen als miteinander verknüpft hervorgehoben.

Entsprechend Figur 1 ist neben vorangehend beschriebener Auswahl aus vorgeschlagenen Maßnahmen auch eine manuelle bzw. benutzerindividuelle Festlegung einer Maßnahme möglich. Beispielsweise wird eine solche benutzerindividuelle Maßnahme 114 per Benutzereingabe 4 für eine fünfte Informationssicherheits-Schwachstelle 15 in die geräte- bzw. ressourcenindividuelle Aufgabenliste 110 eingetragen. Da diese benutzerindividuelle Maßnahme 114 entsprechend dem vorliegenden Ausführungsbeispiel auch für die zweite Informationssicherheits-Schwachstelle 12 angewendet werden soll, erfolgt eine entsprechende Verknüpfung der benutzerindividuellen Maßnahmen 114 für die zweite 12 und die fünfte Informationssicherheits-Schwachstelle 15 über die geräte- bzw. ressourcenindividuelle Aufgabenliste 110 analog zu vorangehend beschriebener Vorgehensweise. An der graphischen Benutzerschnittstelle des Anlagenüberwachungssystems wird diese Verknüpfung durch Linien zwischen den Kontrollbereichen 122, 125 einerseits und der geräte- bzw. ressourcenindividuellen Aufgabenliste 110 anderseits symbolisiert.

Zusätzlich können die Informationssicherheits-Schwachstellen 11-15 für eine Festlegung einer Benutzerpriorisierung der Maßnahmen 111-114 bei Erstellung der geräte- bzw. ressourcenindividuellen Aufgabenliste 110 mit einer Risikobewertung, insbesondere in Form eines Risikolevels, an der graphischen Benutzerschnittstelle des Anlagenüberwachungssystems angezeigt werden. Damit können die Maßnahmen 111-114 entsprechend der Benutzerpriorisierung durch ein Konfigurationssystem des industriellen Automatisierungssystems abgearbeitet werden. Darüber hinaus können die jeweils möglichen Maßnahmen 111-114 für die jeweilige Informationssicherheits-Schwachstelle 11-15 zur Benutzerauswahl mit einer Bewertung einer Risikoreduktion durch die jeweilige Maßnahme 111-114 an der graphischen Benutzerschnittstelle des Anlagenüberwachungssystems angezeigt werden. Auf diese Weise können die Maßnahmen 111-114 im Sinn einer Maximierung ihrer Wirkung priorisiert werden.

Aufgabenlisten mit Maßnahmen werden vorteilhafterweise geräte- bzw. ressourcenweise abgearbeitet. Entsprechend Figur 1 wird hierzu abschließend für das Gerät 10 ein Maßnahmenpaket 120 festgeschrieben, das die geräte- bzw. ressourcenindividuelle Aufgabenliste 110 mit den durch Bedienpersonal bestätigten ausgewählten Maßnahmen 111-114 umfasst. Grundsätzlich können die Maßnahmen anhand von geräte- bzw. ressourcenindividuellen Aufgabenlisten darauf überprüft werden, ob sie für mehrere Geräte bzw. Ressourcen vorgesehen sind. Für mehrere Geräte bzw. Ressourcen vorgesehene Maßnahmen können dann in den geräte- bzw. ressourcenindividuellen Aufgabenlisten miteinander verknüpft werden. In diesem Fall werden miteinander verknüpfte Maßnahmen nur einmalig bzw. einheitlich für sämtliche Geräte bzw. Ressourcen umgesetzt, die von der jeweiligen Maßnahme betroffen sind. Vorzugsweise wird eine Maßnahme, die entsprechend Benutzerauswahl in eine aktuell bearbeitete geräte- bzw. ressourcenindividuelle Aufgabenliste eingetragen wird, automatisch mit sämtlichen weiteren Aufgabenlisten für Geräte bzw. Ressourcen verknüpft, die ebenfalls die jeweilige Maßnahme erfordern. Auf diese Weise können Maßnahmen über mehrere Geräte bzw. Ressourcen hinweg widerspruchsfrei umgesetzt werden.

Die Maßnahmen 111-114 zur Behebung der Informationssicherheits-Schwachstellen 11-15 können Software-Aktualisierungen, insbesondere Firmware-Updates, bzw. Konfigurationsänderungen umfassen. Vorzugsweise umfassen die durch Gerätehersteller bzw. durch vertrauenswürdige Instanzen bereitgestellten Informationen bzw. Empfehlungen zusätzlich Angaben, durch welche Firmware-Versionen die jeweilige Informationssicherheits-Schwachstelle 11-15 behoben wird. Beispielsweise können an der graphischen Benutzerschnittstelle des Anlagenüberwachungssystems für ein ausgewähltes Gerät bzw. für eine ausgewählte Ressource eine Liste verfügbarer Firmware-Versionen mit einer Angabe der durch die jeweilige Firmware-Version jeweils behobenen Informationssicherheits-Schwachstellen des ausgewählten Geräts bzw. der ausgewählten Ressource zur Benutzerauswahl angezeigt werden. Darüber hinaus wird die geräte- bzw. ressourcenindividuelle Aufgabenliste in diesem Fall vorteilhafterweise automatisch an die jeweilige Firmware-Version angepasst. Außerdem kann die Liste der verfügbaren Firmware-Versionen mit der Angabe der durch die jeweilige Firmware-Version jeweils behobenen Informationssicherheits-Schwachstellen nach einem Risikolevel der behobenen Informationssicherheits-Schwachstellen sortiert angezeigt werden. Dies ermöglicht eine nochmals verbesserte Priorisierung der Umsetzung der Maßnahmen.

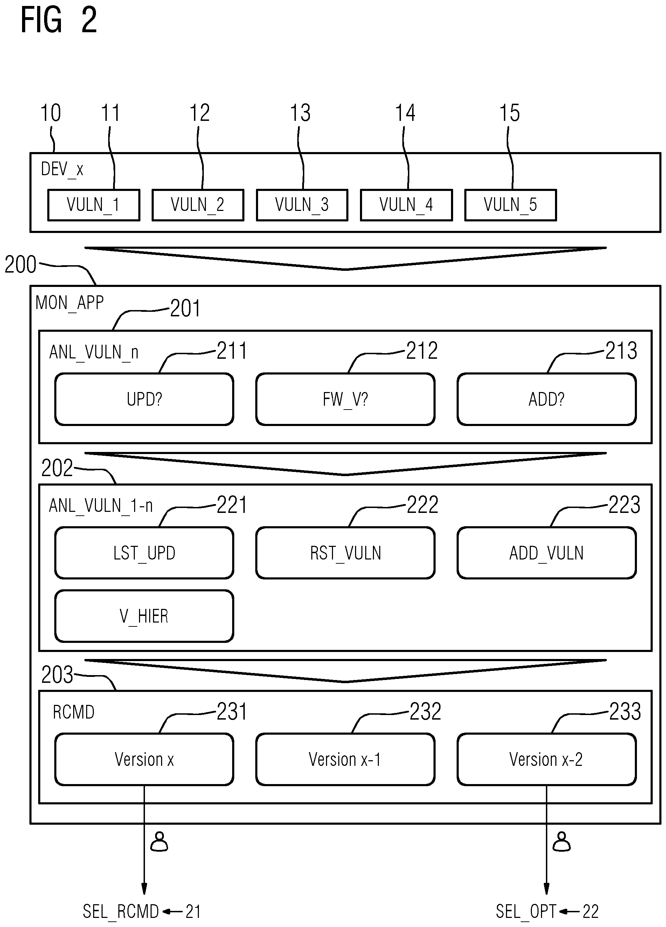

Eine Unterstützung bei einer Auswahl geeigneter Firmware-Versionen zur Behandlung von Informationssicherheits-Schwachstellen kann insbesondere mittels einer Überwachungsanwendung erfolgen, die durch das Anlagenüberwachungssystem bereitgestellt wird. Entsprechend Figur 2 greift die Überwachungsanwendung 200 auf Informationen über die für das Gerät 10 entsprechend vorangehenden Ausführungen erfasste Informationssicherheits-Schwachstellen 11-15 zu. Die Überwachungsanwendung 200 stellt insbesondere Funktionen 201 bereit, die auf eine isolierte Analyse einzelner Informationssicherheits-Schwachstellen abzielen. Hierzu zählt ein Funktionsmodul 211 zur Überprüfung, ob ein Firmware-Update zur Behebung der jeweiligen Informationssicherheits-Schwachstelle überhaupt verfügbar ist. Außerdem ist ein Funktionsmodul 212 zur Ermittlung vorgesehen, welche Firmware-Version konkret als Update benötigt wird. Schließlich ist ein Funktionsmodul 213 zur Analyse vorgesehen, ob zusätzlich zu einem Firmware-Update weitere Schritte zur Behebung der jeweiligen Informationssicherheits-Schwachstelle erforderlich sind.

Über eine isolierte Analyse einzelner Informationssicherheits-Schwachstellen hinaus stellt die Überwachungsanwendung 200 Funktionen 202 bereit, die auf eine Analyse der Informationssicherheits-Schwachstellen in Zusammenspiel mit weiteren sicherheitsrelevanten Faktoren abzielen. Hierzu zählt ein Funktionsmodul 221 zur Erstellung einer Liste mit als Update verfügbaren Firmware-Versionen. Zusätzlich ist ein Funktionsmodul 222 zur Ermittlung jener Informationssicherheits-Schwachstellen vorgesehen, die sich nicht durch ein Firmware-Update beheben lassen. Komplementär dazu dient ein zusätzliches Funktionsmodul 223, mittels dessen eine Liste der Informationssicherheits-Schwachstellen erstellt wird, für die keine weiteren Schritte zur Behebung erforderlich sind. Außerdem ist ein Funktionsmodul 224 zur Ermittlung einer Versionshierarchie für die verfügbaren Firmware-Versionen vorgesehen.

Darüber hinausstellt die Überwachungsanwendung 200 Funktionen 203 zur Generierung von Handlungsoptionen 231-233 auf Basis vorangehend beschriebener Analysen bereit. Eine erste, empfohlene Handlungsoption 231 kann als Maßnahme beispielsweise ein Firmware-Update auf eine ausgewählte oder aktuellste Firmware-Version x umfassen, durch die sich eine maximale Anzahl n von Informationssicherheits-Schwachstellen mit einem gegebenen Risikolevel beheben lässt. Alternativ hierzu kann eine zweite Handlungsoption 232 als Maßnahme mit Einschränkungen beispielsweise ein Firmware-Update auf eine Vorgängerversion x-1 der ausgewählten oder aktuellsten Firmware-Version umfassen, durch die sich eine reduzierte Anzahl n-y von Informationssicherheits-Schwachstellen mit einem gegebenen Risikolevel beheben lässt. Demgegenüber kann eine dritte Handlungsoption 233 als Maßnahme mit noch weitergehenden Einschränkungen beispielsweise ein Firmware-Update auf eine Vor-Vorgängerversion x-2 umfassen. Per Benutzerauswahl 21, 22 kann zumindest eine dieser Handlungsoptionen 231-233 zur Umsetzung vorgesehen und verwendet werden. Vorzugsweise wird durch die Überwachungsanwendung 200 für jede der Handlungsoptionen im Einzelnen dargestellt, welche Informationssicherheits-Schwachstellen konkret behoben werden, welche Informationssicherheits-Schwachstellen nicht durch ein Firmware-Update behoben werden können und für welche Informationssicherheits-Schwachstellen weitere Schritte erforderlich sind.

Obige Maßnahmen umfassen nicht nur Firmware-Updates bzw. Konfigurationsänderungen, sondern können beispielsweise eine physische bzw. räumliche Sicherung von Daten oder anderweitige Vorkehrungen in Bezug auf Datensicherung, Verschlüsselung und Zugriffskontrollen sowie ein Einsatz fehlertoleranter Systeme sein.

## Patentansprüche

1. Verfahren zur Behandlung von Informationssicherheits-Schwachstellen innerhalb eines industriellen Automatisierungssystems, bei dem
- Geräte (10) und/oder Ressourcen des Automatisierungssystems ermittelt werden, die gegenüber einem unberechtigten Zugriff zu schützen sind,
- für die ermittelten Geräte (10) und/oder Ressourcen bekannte Informationssicherheits-Schwachstellen (11-15) erfasst werden,
- pro Gerät (10) und/oder Ressource eine geräte- und/oder ressourcenindividuelle Aufgabenliste (110) mit sämtlichen für das Gerät und/oder die Ressource vorgesehenen Maßnahmen (111-114) erstellt wird, die zur Behandlung der erfassten Informationssicherheits-Schwachstellen (11-15) erforderlich oder geeignet sind,
- die Maßnahmen (111-114) anhand der jeweiligen geräte- und/oder ressourcenindividuellen Aufgabenliste (110) darauf überprüft werden, ob sie bei mehreren Informationssicherheits-Schwachstellen (11-15) zur Behebung vorgesehen sind,
- Maßnahmen (111-113), die bei mehreren Informationssicherheits-Schwachstellen (11-14) vorgesehen sind, in der jeweiligen geräte- und/oder ressourcenindividuellen Aufgabenliste (110) miteinander verknüpft werden,
- bei miteinander verknüpften Maßnahmen (111-113) nur eine einmalige Umsetzung für sämtliche Informationssicherheits-Schwachstellen (11-14) erfolgt, bei denen die jeweilige Maßnahme zur Behebung vorgesehen ist.

2. Verfahren nach Anspruch 1,
bei dem zur Erstellung der geräte- und/oder ressourcenindividuellen Aufgabenlisten an einer graphischen Benutzerschnittstelle eines Anlagenüberwachungssystems jeweils mögliche Maßnahmen für die jeweilige Informationssicherheits-Schwachstelle zur Benutzerauswahl angezeigt werden und bei dem eine der möglichen Maßnahmen entsprechend Benutzerauswahl in eine aktuell bearbeitete geräte- und/oder ressourcenindividuelle Aufgabenliste eingetragen und automatisch mit sämtlichen übereinstimmenden Maßnahmen in der geräte- und/oder ressourcenindividuellen Aufgabenliste verknüpft wird, die bei anderen Informationssicherheits-Schwachstellen zur Behebung vorgesehen sind.

3. Verfahren nach Anspruch 2,
bei dem die Informationssicherheits-Schwachstellen für eine Festlegung einer Benutzerpriorisierung der Maßnahmen bei Erstellung der geräte- und/oder ressourcenindividuellen Aufgabenlisten mit einer Risikobewertung, insbesondere in Form eines Risikolevels, an der graphischen Benutzerschnittstelle des Anlagenüberwachungssystems angezeigt werden und bei dem die Maßnahmen entsprechend der Benutzerpriorisierung durch ein Konfigurationssystem des industriellen Automatisierungssystems abgearbeitet werden.

4. Verfahren nach einem der Ansprüche 2 oder 3,
bei dem die jeweils möglichen Maßnahmen für die jeweilige Informationssicherheits-Schwachstelle zur Benutzerauswahl mit einer Bewertung einer Risikoreduktion durch die jeweilige Maßnahme an der graphischen Benutzerschnittstelle des Anlagenüberwachungssystems angezeigt werden.

5. Verfahren nach einem der Ansprüche 1 bis 4,
bei dem die Maßnahmen anhand der geräte- und/oder ressourcenindividuellen Aufgabenlisten darauf überprüft werden, ob sie für mehrere Geräte und/oder Ressourcen vorgesehen sind, bei dem für mehrere Geräte und/oder Ressourcen vorgesehene Maßnahmen in den geräte-und/oder ressourcenindividuellen Aufgabenlisten miteinander verknüpft werden und bei dem bei miteinander verknüpften Maßnahmen nur eine einmalige Umsetzung für sämtliche Geräte und/oder Ressourcen erfolgt, die von der jeweiligen Maßnahme betroffen sind.

6. Verfahren nach Anspruch 5,
bei dem eine entsprechend Benutzerauswahl in eine aktuell bearbeitete geräte- und/oder ressourcenindividuelle Aufgabenliste eingetragene Maßnahme automatisch mit sämtlichen weiteren Aufgabenlisten für Geräte und/oder Ressourcen verknüpft wird, die ebenfalls die jeweilige Maßnahme erfordern.

7. Verfahren nach einem der Ansprüche 1 bis 6,
bei dem die Aufgabenlisten mit den Maßnahmen geräte- und/oder ressourcenweise abgearbeitet werden.

8. Verfahren nach einem der Ansprüche 1 bis 7,
bei dem die Informationssicherheits-Schwachstellen anhand durch Gerätehersteller und/oder durch vertrauenswürdige Instanzen bereitgestellter Informationen erfasst werden und bei dem die Maßnahmen zur Behandlung der Informationssicherheits-Schwachstellen anhand durch von Geräteherstellern und/oder von vertrauenswürdigen Instanzen bereitgestellten Empfehlungen ermittelt werden.

9. Verfahren nach Anspruch 8,
bei dem die Maßnahmen Software-Aktualisierungen, insbesondere Firmware-Updates, und/oder Konfigurationsänderungen umfassen.

10. Verfahren nach einem der Ansprüche 8 oder 9,
bei dem die durch Gerätehersteller und/oder durch vertrauenswürdige Instanzen bereitgestellten Informationen und/oder Empfehlungen Angaben umfassen, durch welche Firmware-Versionen die jeweilige Informationssicherheits-Schwachstelle behoben wird.

11. Verfahren nach Anspruch 10,
bei dem an der graphischen Benutzerschnittstelle des Anlagenüberwachungssystems für ein ausgewähltes Gerät und/oder für eine ausgewählte Ressource eine Liste verfügbarer Firmware-Versionen mit einer Angabe der durch die jeweilige Firmware-Version jeweils behobenen Informationssicherheits-Schwachstellen des ausgewählten Geräts und/oder der ausgewählten Ressource zur Benutzerauswahl angezeigt wird.

12. Verfahren nach Anspruch 11,
bei dem die geräte- und/oder ressourcenindividuelle Aufgabenliste automatisch an die jeweilige Firmware-Version angepasst wird.

13. Verfahren nach einem der Ansprüche 11 oder 12,
bei dem die Liste der verfügbaren Firmware-Versionen mit der Angabe der durch die jeweilige Firmware-Version jeweils behobenen Informationssicherheits-Schwachstellen nach einem Risikolevel der behobenen Informationssicherheits-Schwachstellen sortiert angezeigt wird.

14. Computerprogramm zur Durchführung eines Verfahrens nach einem der Ansprüche 1 bis 13, wobei das Computerprogramm zumindest einen in einen Arbeitsspeicher einer Datenverarbeitungseinrichtung ladbaren und durch einen Prozessor der Datenverarbeitungseinrichtung ausführbaren Codeabschnitt aufweist, bei dessen Ausführung
- Geräte und/oder Ressourcen des Automatisierungssystems ermittelt werden, die gegenüber einem unberechtigten Zugriff zu schützen sind,
- für die ermittelten Geräte und/oder Ressourcen bekannte Informationssicherheits-Schwachstellen erfasst werden,
- pro Gerät und/oder Ressource eine geräte- und/oder ressourcenindividuelle Aufgabenliste mit sämtlichen für das Gerät bzw. die Ressource vorgesehenen Maßnahmen erstellt wird, die zur Behandlung der erfassten Informationssicherheits-Schwachstellen erforderlich oder geeignet sind,
- die Maßnahmen anhand der jeweiligen geräte- und/oder ressourcenindividuellen Aufgabenliste darauf überprüft werden, ob sie bei mehreren Informationssicherheits-Schwachstellen zur Behebung vorgesehen sind,
- Maßnahmen, die bei mehreren Informationssicherheits-Schwachstellen vorgesehen sind, in der jeweiligen geräte- und/oder ressourcenindividuellen Aufgabenliste miteinander verknüpft werden,
- bei miteinander verknüpften Maßnahmen nur eine einmalige Umsetzung für sämtliche Informationssicherheits-Schwachstellen erfolgt, bei denen die jeweilige Maßnahme zur Behebung vorgesehen ist,
wenn das Computerprogramm in der Datenverarbeitungseinrichtung abläuft.
